# EUROPÄISCHE PATENTSCHRIFT

(11) **EP 2 132 638 B1**
(45) Veröffentlichungstag und Bekanntmachung des Hinweises auf die Patenterteilung: **21.08.2013**
(21) Anmeldenummer: 08708056.0
(22) Anmeldetag: 22.01.2008
(51) Int. Cl.: G06F 13/40

(54) **VORRICHTUNG ZUM ANSCHLUSS EINES EXTERNEN GERÄTES AN EINEN SERIELLEN FLEXRAY-DATENBUS**
DEVICE FOR CONNECTING AN EXTERNAL DEVICE TO A SERIAL FLEXRAY DATA BUS
DISPOSITIF POUR RACCORDER UN APPAREIL EXTERNE À UN BUS DE DONNÉES SÉRIE FLEXRAY

(30) Priorität: 02.03.2007 DE 102007010187
(43) Veröffentlichungstag der Anmeldung: 16.12.2009
(73) Patentinhaber: Robert Bosch GmbH, 70442 Stuttgart (DE)
(72) Erfinder: HUGEL, Robert, 76199 Karlsruhe (DE)
(86) Internationale Anmeldenummer: PCT/EP2008/050679
(87) Internationale Veröffentlichungsnummer: WO 2008/107217

(56) Entgegenhaltungen:
- EP-A- 1 085 705
- WO-A-03/069843
- WO-A1-2004/068346
- DE-A1- 10 148 325

## Beschreibung

Die vorliegende Erfindung betrifft eine Vorrichtung zum Anschluss eines externen Gerätes an einen seriellen FlexRay-Datenbus, insbesondere zum Anschluss eines externen Testgerätes zur Diagnose eines in einem Kraftfahrzeug verlegten FlexRay-Datenbusses.

Zur Fehlerdiagnose werden in einer Kfz-Werkstatt Testgeräte eingesetzt, die einen Zugang zu einem internen in einem Kraftfahrzeug verlegten Bussystem erfordern. Die Testgeräte analysieren den auf den Bus übertragenen Datenverkehr, d. h. es wird ein sogenanntes Bus Monitoring durchgeführt. Herkömmliche Bus-Systeme wie CAN oder LIN habe eine relativ niedrige Datenübertragungsrate. Beispielsweise weist CAN eine maximale Datenübertragungsrate von etwa 1 MBit/s auf. Bei derartigen herkömmlichen Datenbussen ist es daher möglich, externe Testgeräte ohne starke Einschränkungen der Signalgüte direkt an den seriellen Bus anzuschließen, obwohl das angeschlossene Geräte aufgrund seiner eigenen Kapazität und der Induktivität seiner Anschlussleitungen das auf den Datenbus übertragene Signal verformt.

Die WO 03/069843 A2 zeigt ein Verfahren und eine Schaltung zur Überwachung und Verwaltung von Datenverkehr in einem Kommunikationssystem mit mehreren Kommunikationsknoten. Die Schaltung umfasst dabei mehrere Bustreiber, die über einen Sternpunkt miteinander verbunden sind. Ebenso ist ein Busmonitor über den Sternpunkt mit den Bustreibern verbunden und bildet so zusammen mit dem Sternpunkt und den Bustreibern einen Sternkoppler. Der Busmonitor steht in Verbindung mit einem Host-Controller.

Die WO 2004/068346 A1 offenbart ein Steuergerät für ein Kraftfahrzeug und ein dazugehöriges Kommunikationsverfahren. In einer Variante ist dabei ein Motorsteuergerät gezeigt, das über eine Schnittstelle mit einem CAN-Bus verbunden ist Der CAN-Bus ist wiederum über eine weitere Schnittstelle mit einem Diagnosetool verbunden. Eine weitere Variante zeigt ein Motorsteuergerät, an das ein Entwicklungstool über eine Schnittstelle angeschlossen ist.

Aufgrund der hohen Datenübertragungsrate eines FlexRay-Datenbusses ist es allerdings nicht mehr möglich, ein Test- bzw. Diagnosegerät direkt an den seriellen FlexRay-Datenbus anzuschließen, da die Signalqualität durch die Kapazität oder durch die Induktivität des angeschlossenen Testgerätes derart stark vermindert wird, dass bei einer Datenübertragung über den seriellen FlexRay-Datenbus bei Anschluss des externen Gerätes die Fehlerrate der Datenübertragung stark ansteigt.

Es ist daher die Aufgabe der vorliegenden Erfindung, eine Vorrichtung zu schaffen, die den Anschluss eines externen Gerätes an einen seriellen FlexRay-Datenbus erlaubt.

Diese Aufgabe wird erfingdungsgemäß durch eine Vorrichtung mit den im Patentanspruch 1 angegebenen Merkmalen gelöst.

Die Erfindung schafft eine Vorrichtung zum Anschluss eines externen Gerätes an einen seriellen FlexRay-Datenbus, auf dem Daten als Spannungsdifferenzsignal über zwei Datenleitungen übertragen werden, wobei zur Erhaltung einer Signalintegrität des Spannungsdifferenzsignals das Gerät durch eine aktive Sternschaltung von dem restlichen seriellen FlexRay-Datenbus entkoppelt ist.

Bei einer Ausführungsform der erfindungsgemäßen Vorrichtung weist die aktive Sternschaltung mindestens zwei Bustreiberschaltungen und einen internen Signalmultiplexer auf.

Bei einer Ausführungsform der erfindungsgemäßen Vorrichtung weist jede Bustreiberschaltung auf:
eine Spannungsquelle zur Erzeugung eines Signalpegels, welcher anzeigt, dass kein Signal über den seriellen Bus übertragen wird,
eine Push/Pull-Endstufe zum Erzeugen eines Sendespannungsdifferenzsignals,
einen Fensterkomparator zur Generierung eines Wake-up-Signals bei Empfang eines "Wake-up-Symbols, und
einen Schmitt-Trigger zur Generierung eines Empfangsspannungsdifferenzsignals.

Bei einer Ausführungsform der erfindungsgemäßen Vorrichtung weist das Spannungsdifferenzsignal einen Signalhub von etwa +/- 500 mV bis etwa +/- 1V auf.

Bei einer Ausführungsform der erfindungsgemäßen Vorrichtung werden die Daten mit einer Datenübertragungsrate von 10 MBit/s über den seriellen FlexRay-Datenbus übertragen.

Bei einer Ausführungsform der erfindungsgemäßen Vorrichtung verstärkt die aktive Sternschaltung ein von einer Bustreiberschaltung empfangenes Datensignal und sendet das empfangene Datensignal über alle übrigen Bustreiberschaltungen mittels der Push/Pull-Endstufe verstärkt weiter.

Bei einer Ausführungsform der erfindungsgemäßen Vorrichtung ist das Gerät ein Testgerät zur Analyse des auf dem seriellen FlexRay Datenbus übertragenen Differenzsignals.

Im Weiteren werden bevorzugte Ausführungsformen der erfindungsgemäßen Vorrichtung zum Anschluss eines externen Gerätes an einen seriellen FlexRay-Datenbus unter Bezugnahme auf die beigefügten Figuren zur Erläuterung erfindungswesentlicher Merkmale beschrieben.

Es zeigen:
- Figur 1:: ein Beispiel für eine Topologie eines FlexRay-Datenbusses zur Erläuterung der erfindungsgemäßen Vorrichtung;
- Figuren 2A, 2B:: verschiedene Topologien eines FlexRay-Datenbusses zur Erläuterung der Funktionsweise der erfindungsgemäßen Vorrichtung;
- Figur 3:: ein Blockschaltbild einer möglichen Ausführungsform der erfindungsgemäßen Vorrichtung zum Anschluss eines externen Gerätes an einen seriellen FlexRay-Datenbus;
- Figur 4:: ein weiteres Beispiel für einen FlexRay-Datenbus, der die erfindungsgemäße Vorrichtung zum Anschluss eines externen Gerätes aufweist.

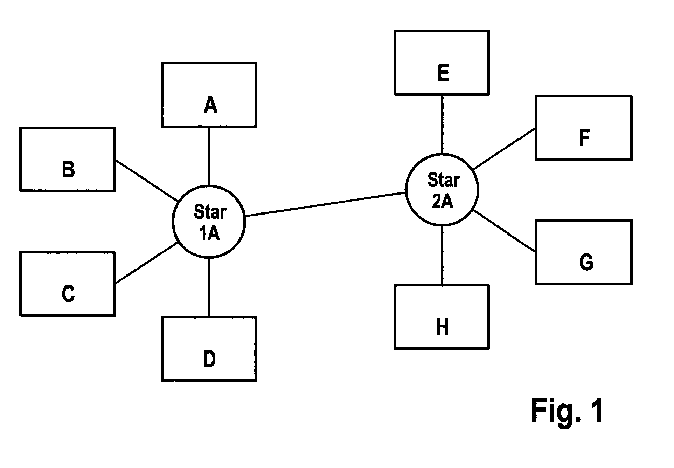

Figur 1 zeigt ein Beispiel für eine Topologie eines FlexRay-Datenbusses. Der FlexRay-Datenbus ist ein serieller Datenbus, bei dem Daten als Spannungsdifferenzsignale über zwei Datenleitungen übertragen werden, wobei die beiden Datenleitungen verdrillt miteinander verlegt werden, beispielsweise innerhalb einer Karosserie eines Fahrzeuges. Das Busprotokoll des FlexRay-Datenbusses erlaubt verschiedenen Knoten bzw. Steuergeräten innerhalb des Fahrzeugs unter harten Echtzeitanforderungen miteinander flexibel zu kommunizieren. Die Datenübertragungsrate in einem FlexRay-Datenbus liegt bei etwa 10 MBit/s und ist deutlich höher als bei herkömmlichen seriellen Bussystemen im Kfz. Eine fest definierte Übertragungszeit während eines zeitgesteuerten Betriebsmodus sowie eine ereignisorientierte Datenübertragung der restlichen Zeitspanne sorgen für eine relativ hohe Flexibilität und Sicherheit bei der Datenübertragung. Ein FlexRay-Datenbussystem enthält verschiedene Komponenten, insbesondere passive Sterne, Bustreiber und aktive Sterne. Weitere Komponenten sind beispielsweise Abschlussnetzwerke, ESD-Schutzschaltungen und Gleichtaktfilter.

Bei dem in Figur 1 dargestellten Beispiel für ein FlexRay-Bussystem sind zwei aktive Sterne bzw. Sternschaltungen miteinander über einen FlexRay-Bus verbunden, wobei an jedem Stern mehrere Knoten bzw. Steuergeräte des Bussystems angeschlossen sind. Die aktiven Sterne arbeiten als multidirektionale Signalverstärker ohne ein Timing Refresh. Solange keine Botschaft versandt wird, werden alle Arme bzw. Branches des FlexRay-Datenbusses auf Aktivität überwacht. Wird an einem Arm eine Aktivität erkannt, werden alle anderen Arme zum Weitersenden des Datensignals konfiguriert.

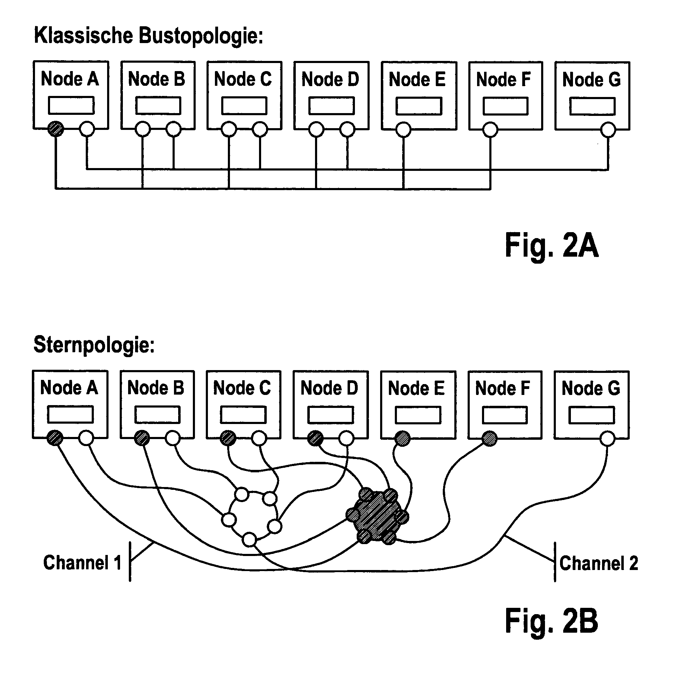

Die Figuren 2A, 2B zeigen mehrere Topologien eines FlexRay-Datenbussystems. Das Netzwerk kann flexibel in einer klassischen Bus-Topologie, wie in Figur 2A dargestellt, oder in einer Stern-Topologie, wie in Figur 2B dargestellt, aufgebaut werden.

Bei einer möglichen Ausführungsform weist das FlexRay-Datenbussystem zwei Kanäle auf, die eine redundante oder mehr auf Bandbreite ausgelegte Datenübertragung ermöglichen. Ein zusätzlicher Überwachungsmechanismus, ein sogenannter Bus-Guardian, verhindert Fehlfunktionen, indem er jedem Knoten den Buszugang zum Senden einer Botschaft bzw. Nachricht zu festgelegten Zeitpunkten erlaubt. Wie man in Figur 2B erkennen kann, sind verschiedene Steuergeräte bzw. Knoten teilweise redundant über aktive Sternschaltungen und zwei Kanäle miteinander vernetzt. Die Daten werden auf den seriellen FlexRay-Datenbus in Frames übertragen. Die Synchronisation der Steuergeräte bzw. Knoten erfolgt mittels übertragener Synchronisationsnachrichten. Die Datenframes werden in Zeitschlitzen bzw. Timeslots zu dem Datenbus übertragen, wobei jedem Knoten bzw. Steuergerät ein oder mehrere Zeitschlitze bzw. Timeslots zugeordnet sind. Die an dem seriellen Datenbus angeschlossenen Steuergeräte bzw. Knoten hören den über den Bus übertragenen Datenverkehr mit.

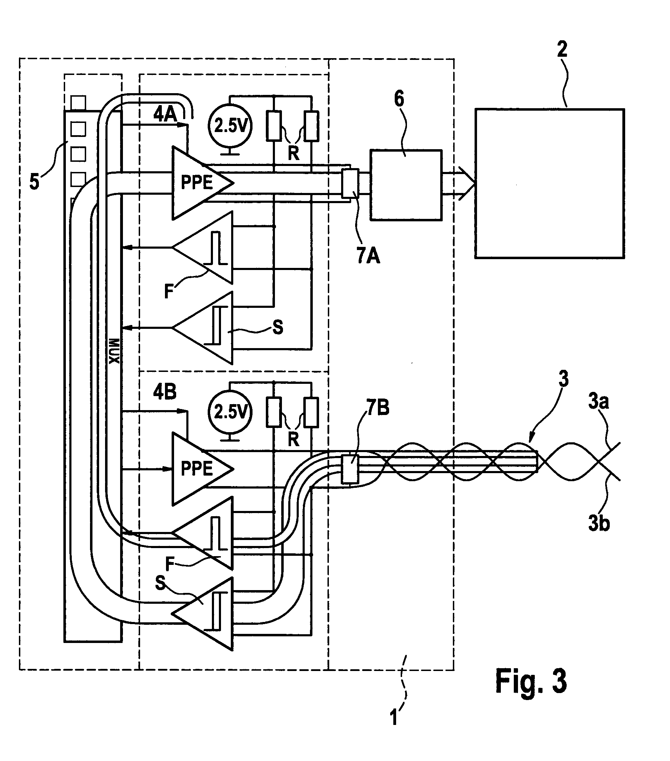

Figur 3 zeigt ein Blockschaltbild zur Darstellung einer bevorzugten Ausführungsform der erfindungsgemäßen Vorrichtung 1 zum Anschluss eines externen Gerätes 2 an einen seriellen FlexRay-Datenbus 3, auf dem Daten als Spannungsdifferenzsignale über zwei Datenleitungen 3a, 3b übertragen werden. Die Datenübertragungsleitungen 3a, 3b bestehen beispielsweise aus verdrillten Leitungen. Die erfindungsgemäße Vorrichtung 1 entkoppelt zur Erhaltung einer Signalintegrität des auf dem seriellen Datenbus 3 übertragenen Referenzdatensignals das Gerät 2 von dem seriellen FlexRay-Datenbus 3. Hierzu weist die erfindungsgemäße Vorrichtung eine integrierte aktive Sternschaltung mit mindestens zwei Bustreiberschaltungen 4A, 4B sowie eine Signalmultiplexerschaltung 5 auf. Die Vorrichtung 1 weist eine Buchse 6 zum Anschluss des externen Gerätes 2 an die Bustreiberschaltung 4A auf.

Jede der beiden in Figur 3 dargestellten Bustreiberschaltungen 4A, 4B weist eine Spannungsquelle zur Erzeugung eines Signalpegels von etwa 2,5 V auf, welcher anzeigt, dass kein Signal übertragen wird, d. h. es wird ein sogenannter IDLE-Zustand angezeigt, bei dem der Datenbus frei ist. Darüber hinaus enthält jede der beiden Bustreiberschaltungen 4A, 4B eine Push/Pull-Endstufe PPE zum Erzeugen eines Sendespannungsdifferenzsignals, wobei die Push/Pull-Endstufen jeweils aktivierbar und deaktivierbar sind. Die beiden Bustreiberschaltungen 4A, 4B weisen zudem jeweils einen Fensterkomparator zur Erzeugung eines Wake-up-Signals auf. Darüber hinaus ist in den Bustreiberschaltungen 4A, 4B jeweils ein Schmitt-Trigger S zur Regenerierung des Empfangsreferenzdatensignals vorgesehen. Die Überwachung der beiden Anschlüsse erfolgt mittels relativ langsamer Fensterkomparatoren F. Die Nachricht bzw. Botschaft selbst wird über die relativ schnellen Schmitt-Trigger S weitergegeben. Der interne Signalmultiplexer 5 schaltet bei der in Figur 3 dargestellten Ausführungsform die Bustreiberschaltung 4B, die an den FlexRay-Datenbus 3 angeschlossen ist, an die Bustreiberschaltung 4A für das externe Testgerät 2, das über die Buchse 6 anschließbar ist. Bei einer bevorzugten Ausführungsform ist der Signalmultiplexer 5 bzw. die interne Schalteinrichtung 5 konfigurierbar. Wie man in Figur 3 erkennen kann, sind Abschlusswiderstände 7A, 7B vorgesehen, vorzugsweise ohmsche Widerstände zur Minimierung von Signalreflektionen. Darüber hinaus ist die Spannungsquelle über Push/Pull-Widerstände an die Datenübertragungsleitungen angeschlossen. Die übertragene Differenzspannung auf dem Bus liegt bei ohmscher Last typischerweise bei +/- 500 mV bis +/- 1V. An den Busleitungen liegt ein Differenzsignal an. Die Spannung von ca. 0 V zeigt an, dass der Bus frei (idle) ist und keine Botschaft verschickt wird. Eine negative Spannung entspricht dem logischen Datenbitwert "0". Eine positive Spannung entspricht dem logischen Datenbitwert "1". Die Daten werden über den seriellen FlexRay-Datenbus 3 vorzugsweise mit einer Datenübertragungsrate von 10 MBit/s seriell übertragen.

Bei der in Figur 3 dargestellten Ausführungsform weist die erfindungsgemäße Vorrichtung 1 lediglich zwei Bustreiberschaltungen 4A, 4B auf. Bei weiteren Ausführungsformen können auch mehrere Bustreiberschaltungen 4 vorgesehen werden, insbesondere zum Anschluss von mehreren Testgeräten 2 an den seriellen Datenbus 3.

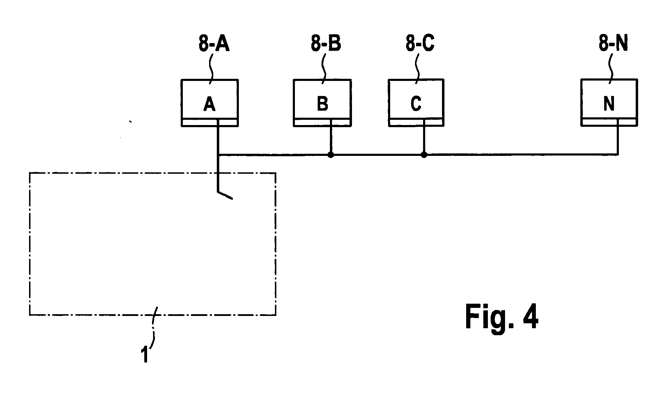

Figur 4 zeigt ein Beispiel für ein FlexRay-Datenbussystem, bei dem Daten seriell über den Datenbus 3 zwischen Knoten bzw. Steuergeräten 8-a, 8-b, 8-c, 8-n übertragen werden. Über die erfindungsgemäße Vorrichtung 1 kann ein externes Gerät 2, insbesondere ein externes Testgerät angeschlossen werden. Bei der erfindungsgemäßen Vorrichtung 1, wie sie in Figur 3 dargestellt wird, wird durch die interne Beschaltung das externe Testgerät 2 von dem seriellen Datenbus 3 entkoppelt bzw. isoliert, d. h. die Änderung des Signalpegels bzw. die Änderung einer Signalformung auf der einen Seite ändert nicht den Signalpegel bzw. die Signalform auf der anderen Seite. Ist das Testgerät 2 nicht an die Vorrichtung 1 angeschlossen, hat dies keinen Einfluss auf die Signalübertragung auf dem seriellen Datenbus 3. Auch die Länge der Anschlussleitungen des Testgerätes 2 haben keine Auswirkungen auf die Datenübertragung über den seriellen Datenbus 3. Durch die Entkopplung zwischen dem seriellen FlexRay-Datenbus 3 und dem Diagnosegerät 2 wird die Signalintegrität auf dem seriellen Datenbus 3 auch während des Messvorgangs erhalten, sodass die Fehlerrate des Testvorgangs gegenüber dem Normalbetrieb nicht ansteigt. Das auf den seriellen Datenbus 3 übertragene Signal wird durch die Anschaltung des Messsystems bzw. des externen Testgerätes 2 nicht beeinflusst.

## Patentansprüche

1. Vorrichtung (1) zum Anschluss eines Fahrzeug-externen Testgerätes (2) an einen seriellen FlexRay-Datenbus, bei dem Daten als Spannungsdifferenzsignal über zwei Datenleitungen (3a, 3b) übertragen werden, wobei zur Erhaltung einer Signalintegrität des Spannungsdifferenzsignals das Testgerät (2) durch eine aktive Sternschaltung dem seriellen FlexRay-Datenbus (3) entkoppelt ist, wobei die aktive Sternschaltung mindestens zwei Bustreiberschaltungen (4A, 4B) und einen Signalmultiplexer (5) aufweist, **dadurch gekennzeichnet, dass** jede Bustreiberschaltung (4A, 4B) aufweist:
(a) eine Spannungsquelle zur Erzeugung eines Signalpegels, welcher anzeigt, dass kein Signal über den seriellen FlexRay-Datenbus (3) übertragen wird;
(b) eine Push/Pull-Endstufe (PPE) zum Erzeugen eines Sendespannungsdifferenzsignals;
(c) einen Fensterkomparator (F) zur Erzeugung eines Wake-up-Signals bei Empfang eines Wake-up-Symbols, und
(d) einen Schmitt-Trigger (S) zur Generierung eines Empfangsspannungsdifferenzsignals.

2. Vorrichtung nach Anspruch 1, wobei das Spannungsdifferenzsignal einen Signalhub von etwa +/- 500 mV bis etwa +/-1 V aufweist.

3. Vorrichtung nach Anspruch 1, wobei die Daten mit einer Datenübertragungsrate von 10 MBit/s auf dem seriellen FlexRay-Datenbus (3) übertragen werden.

4. Vorrichtung nach Anspruch 1, wobei die aktive Sternschaltung einen von einer Bustreiberschaltung (4A, 4B) empfangenes Datensignal über alle übrigen Bustreiberschaltungen mittels der jeweiligen Push/Pull-Endstufe (PPE) verstärkt weiter sendet.

5. Vorrichtung nach Anspruch 1, **dadurch gekennzeichnet, dass** das Fahrzeug-externe Testgerät zur Analyse des auf dem seriellen FlexRay-Datenbus (3) übertragenen Spannungsdifferenzsignals ist

## Claims

1. Apparatus (1) for connecting a vehicle-external tester (2) to a serial FlexRay data bus, in which data are transmitted as a voltage difference signal via two data lines (3a, 3b), wherein the tester (2) is decoupled from the serial FlexRay data bus (3) by an active star circuit in order to preserve a signal integrity for the voltage difference signal, the active star circuit having at least two bus driver circuits (4A, 4B) and a signal multiplexer (5), **characterized in that** each bus driver circuit (4A, 4B) has:
(a) a voltage source for producing a signal level that indicates that no signal is being transmitted via the serial FlexRay data bus (3);
(b) a push/pull output stage (PPE) for producing a transmission voltage difference signal;
(c) a window comparator (F) for producing a wake-up signal when a wake-up symbol is received, and
(d) a Schmitt trigger (S) for generating a reception voltage difference signal.

2. Apparatus according to Claim 1, wherein the voltage difference signal has a signal swing from approximately ± 500 mV to approximately ± 1 V.

3. Apparatus according to Claim 1, wherein the data are transmitted on the serial FlexRay data bus (3) at a data transmission rate of 10 Mbit/s.

4. Apparatus according to Claim 1, wherein the active star circuit sends a data signal received from a bus driver circuit (4A, 4B) onward via all other bus driver circuits in amplified form using the respective push/pull output stage (PPE).

5. Apparatus according to Claim 1, **characterized in that** the vehicle-external tester is designed to analyse the voltage difference signal transmitted on the serial FlexRay data bus (3).

## Revendications

1. Dispositif (1) destiné à raccorder un appareil externe de test (2) à un véhicule par un bus de données série dit "FlexRay", dans lequel des données sont transférées en tant que signal de différence de potentiel par deux conducteurs de données (3a, 3b),
l'appareil de test (2) étant découplé par un circuit étoile actif du bus de données série "FlexRay" (3) pour maintenir l'intégrité du signal de différence de potentiel,
le circuit étoile actif présentant au moins deux circuits (4A, 4B) de pilote de bus et un multiplexeur (5) de signaux,
**caractérisé en ce que**
chaque circuit pilote de bus (4A, 4B) présente :
(a) une source de tension qui forme un niveau de signal qui indique qu'aucun signal n'est transmis par le bus de données série "FlexRay" (3),
(b) un étage final "Push/Pull" (PPE) qui forme un signal d'émission de différence de potentiel,
(c) un comparateur (F) à fenêtre qui forme un signal de réveil lors de la réception d'un symbole de réveil et
(d) une gâchette de Schmitt (S) qui forme un signal de réception de différence de potentiel.

2. Dispositif selon la revendication 1, dans lequel le signal de différence de potentiel s'étend sur environ +/- 500 mV à environ +/- 1V.

3. Dispositif selon la revendication 1, dans lequel les données sont transférées à un débit de transfert de données de 10 MB/s sur le bus de données série "FlexRay" (3).

4. Dispositif selon la revendication 1, dans lequel le circuit étoile actif envoie un signal de donnée reçu par un circuit pilote (4A, 4B) de bus par l'intermédiaire de tous les autres circuits pilotes de bus après amplification au moyen de l'étage final Push/Pull (PPE).

5. Dispositif selon la revendication 1, **caractérisé en ce que** l'appareil de test externe au véhicule est prévu pour analyser le signal de différence de potentiel transféré sur le bus de données série "FlexRay" (3).
